Europäisches Patentamt

European Patent Office

Office européen des brevets

(11) Veröffentlichungsnummer: **0 369 313**

**A1**

# (12) EUROPÄISCHE PATENTANMELDUNG

(21) Anmeldenummer: 89120694.8

(22) Anmeldetag: 08.11.89

(51) Int. Cl.⁵: **C08L 71/12, C08L 77/00, C08K 5/20, //(C08L77/00, 71:12),(C08L71/12,77:00)**

Patentansprüche für folgenden Vertragsstaat: ES.

(30) Priorität: 15.11.88 AT 2791/88

(43) Veröffentlichungstag der Anmeldung:
23.05.90 Patentblatt 90/21

(84) Benannte Vertragsstaaten:
AT BE CH DE ES FR GB GR IT LI LU NL SE

(71) Anmelder: **Petrochemie Danubia Gesellschaft m.b.H.**
**Danubiastrasse 21-25**
**A-2323 Schwechat-Mannswörth(AT)**

(72) Erfinder: **Horacek, Heinz, Dr.**
**Bockgasse 43**
**A-4020 Linz(AT)**

(74) Vertreter: **Kunz, Ekkehard, Dr.**
**Chemie Holding AG Patentwesen St. Peter-Strasse 25**
**A-4021 Linz(AT)**

(54) **Thermoplastischer faserverstärkter Verbundwerkstoff aus Polyphenylenethern und Polyamiden.**

(57) Thermoplastische faserverstärkte Verbundwerkstoffe, die durch Imprägnieren von Verstärkungsfasern mit der Schmelze von Polyphenylenethern, Polyamiden, einem niedermolekularen gesättigten bzw. aromatischen Carbonsäureamid und gegebenenfalls einem Styrolpolymeren erhältlich sind, sowie Verfahren zu deren Herstellung und deren Verwendung.

EP 0 369 313 A1

## Thermoplastischer faserverstärkter Verbundwerkstoff aus Polyphenylenethern und Polyamiden

Die Erfindung betrifft thermoplastische faserverstärkte Verbundwerkstoffe, die durch Imprägnieren von Verstärkungsfasern mit einer Schmelze von Polyphenylenethern, Polyamiden und niedermolekularen gesättigten bzw. aromatischen Carbonsäureamiden erhältlich sind.

Faserverstärkte, thermoplastische Verbundwerkstoffe, wie sie beispielsweise aus der DE-OS 37 24 155 auf Basis einer Polypropylenmatrix bekannt sind, stellen wertvolle Konstruktionswerkstoffe vor allem im Maschinen- und Apparatebau, sowie in der Auto- und Flugzeugindustrie dar. Ihre relativ geringe Temperaturbeständigkeit stellt allerdings einen gewissen Nachteil dar. Andererseits ist der Einsatz von hochtemperaturbeständigen Kunststoffen als Matrix vor allem auf Grund ihrer schlechten Fließeigenschaften nur sehr schwierig und unzureichend möglich. Aus der US 3 379 792, der EP-A 221 341 und der EP-A 225 170 sind beispielsweise unverstärkte, hochtemperaturbeständige Formmassen auf Basis von Polyphenylenethern bekannt, bei denen die Fließeigenschaften durch Zusatz von Polyamiden verbessert werden konnten. Gleichzeitig werden dabei allerdings andere wichtige Eigenschaften der Polyphenylenether, beispielsweise die mechanischen Eigenschaften, verschlechtert.

Eine Verbesserung der Schlagzähigkeit von Polyamid-Polyphenylenethergemischen wird gemäß EP-A-0 234 060 durch Zugabe von Estern aus drei- bis sechswertigen Alkoholen und aliphatischen Carbonsäure erzielt. Zur Verbesserung der Kompatibilität der Polymerphasen kann diese Mischung zusätzlich flüssige Dien-Polymere, Epoxide, ungesättigte Carbonsäuren bzw. deren Derivate, aliphatische Polycarbonsäuren, Silane, funktionalisierte Polyphenylenether, oxidierte Polyolefinwachse, Copolymere von Dicarbonsäuren und vinylaromatischen Verbindungen enthalten. Ebenfalls zur Verbesserung der Kompatibilität und Stabilisierung der Phasen werden dem Polyamid-Polyphenylenethergemisch gemäß EP-A-0 270 247 oberflächenaktive Stoffe, Seifen, modifizierte Kautschuke oder Epoxide zugesetzt, wobei Kautschuke, Epoxide und ungesättigte Carbonsäuren bzw. deren Derivate bevorzugt sind. In den Beispielen wird ein mit Maleinsäureanhydrid gepfropfter Ethylen-Propylenkautschuk verwendet.

Die Aufgabe der vorliegenden Erfindung war es, faserverstärkte Verbundwerkstoffe auf Basis von Polyphenylenethern und Polyamiden mit verbesserten mechanischen Eigenschaften zu finden.

Überraschenderweise wurde gefunden, daß derartige Verbundwerkstoffe mit guten mechanischen und thermischen Eigenschaften sowie mit guter Verarbeitbarkeit erhalten werden, wenn man der verwendeten Polyphenylenether-Polyamid-Mischung niedermolekulare gesättigte bzw. aromatische Carbonsäureamide zusetzt.

Gegenstand der Erfindung ist demnach ein thermoplastischer faserverstärkter Verbundwerkstoff, der durch Imprägnieren von Verstärkungsfasern mit der Schmelze einer Mischung aus 10 bis 90 Gew.Teilen Polyphenylenether und 90 bis 10 Gew.Teilen Polyamid erhältlich ist, wobei die Mischung zusätzlich 0,1 bis 10 Gew.%, bezogen auf die Menge des Polyamids, eines aliphatischen gesättigten Dicarbonsäurediamids mit 3 bis 10 C-Atomen oder Anthranilsäureamid enthält und 0 bis 50 Gew.% des Polyphenylenethers durch ein thermoplastisches Styrolpolymerisat ersetzt sein können. Der besondere Vorteil, der sich durch den Zusatz eines Säureamids ergibt, liegt vor allem in der Erniedrigung der Schmelzeviskosität, entsprechend einer Erhöhung des MFI-Wertes (Schmelzindex) der Schmelze, wodurch eine bessere Imprägnierung der Verstärkungsfasern möglich ist und damit verbesserte mechanische Eigenschaften der Verbundwerkstoffe erreicht werden.

Bevorzugt sind Verbundwerkstoffe, die durch Imprägnieren der Verstärkungsfasern durch Heißpressen bei Temperaturen von 200 bis 350 °C und Drücken von 1,2 bis 40 bar erhältlich sind.

Die Mischung zur Imprägnierung der Verstärkungsfasern enthält bevorzugt 40 bis 60 Gew.Teile Polyphenylenether und 60 bis 40 Gewichtsteile Polyamid.

Als Polyphenylenether und Polyamide eignen sich beispielsweise solche, wie sie in der US 3 379 792, EP-A 221 341 oder EP-A 225 170 angeführt sind, bevorzugt werden Poly (2,6-dialkyl-1,4-phenylen)ether mit 1 oder 2 C-Atomen im Alkylrest sowie Polyamid 6 oder Polyamid 6,6 eingesetzt. Weitere Beispiele für Polyamide (PA) sind Poly-4-aminobuttersäure (PA 4), Poly-7-aminoheptansäure (PA 7), Poly-8-aminooctansäure (PA 8), Poly-10-aminodecansäure (PA 10), Poly-11-aminoundecansäure (PA 11), Poly-12-aminododecansäure (PA 12), Polyheptamethylenpimelamid (PA 7,7), Polyoctamethylensuberamid (PA 8,8), Polyhexamethylensebacamid (PA 6,10) Polynonamethylenacelamid (PA 9,9), Polydecamethylenacelamid (PA 10,9), Polydecamethylensebacamid (PA 10,10), Polybis(4-aminocyclohexyl)methan 1,10 decandicarboxamid, Poly(m-Xylylenadipamid), Poly(p-Xylylensebacamid), Polypiperazinsebacamid.

Der verwendete Polyphenylenether kann bis zu 50 Gew.% durch übliche Homo-und Copolymerisate des Styrols, beispielsweise Polystyrol, Polymethylstyrol oder mittels Kautschuk modifizierten Styrolpolymerisaten ersetzt sein. Polymerblends von Polyphenylenethern und Polyamiden sind beispielsweise als Ultranyl[R] (BASF), Noryl[R] GTX (General Electric), Prevex[R] (Borg Warner) oder Xyron[R] (Asahi), Polymerblends aus Polyphenylenethern und modifiziertem Polystyrol beispielsweise als Luranyl[R](BASF) oder Noryl[R] 110 (General Electric) kommerziell erhältlich.

Als gesättigte aliphatische Dicarbonsäurediamide können Sebacinsäurediamid, Bernsteinsäurediamid, Adipinsäurediamid, Malonsäurediamid, Pimelinsäurediamid, Glutarsäurediamid, Korksäurediamid und Azelainsäurediamid verwendet werden. Bevorzugt sind Dicarbonsäurediamide mit 4 -6 C-Atomen im Molekül. Auch die Verwendung von Mischungen verschiedener Säureamide ist möglich.

Die Polymermischung zur Imprägnierung der Verstärkungsfasern enthält bevorzugt 0,5 bis 5 % Säureamid, bezogen auf die Menge des Polyamids.

Als Verstärkungsfasern eignen sich alle bekannten für verstärkte Kunststoffe verwendbaren Fasern, wie z. B. Fasern aus Glas, Kohle, Aramid, Keramik, Metall oder Mischungen derselben. Unter Fasern sind sowohl Schnittfasern als auch Endlosfasern, beispielsweise in Form von unidirektionalen Rovings zu verstehen, sowie auch Gewebe und Fasermatten, die ebenfalls aus Schnittfasern oder Endlosfasern bestehen können. Der fertige Verbund besitzt üblicherweise einen Gehalt an Verstärkungsfasern von etwa 15 bis 60 Vol.%.

Die Herstellung der erfindungsgemäßen Verbundwerkstoffe erfolgt durch Imprägnierung der Verstärkungsfasern bei 200 bis 350 °C mit der Schmelze einer Mischung aus 10 bis 90 Gew.Teilen Polyphenylenether und 90 bis 10 Gew.Teilen Polyamid, wobei die Mischung zusätzlich 0,1 bis 10 Gew.%, bezogen auf die Menge des Polyamids eines aliphatischen, gesättigten Dicarbonsäurediamids mit 3 bis 10 C-Atomen oder Anthranilsäureamid enthält und 0 bis 50 Gew. % des Polyphenylenethers durch ein thermoplastisches Styrolpolymerisat ersetzt sein können. Der Thermoplastmischung können auch Haftvermittler zugesetzt werden, beispielsweise Blockcopolymere aus Polyamiden und Polyphenylenethern, wie sie z. B. in J. Pol. Sci., Pol. Chem. Ed. 17 (1979) S. 2317 - 2335 beschrieben sind.

Fasermatten, Gewebe oder Rovings aus Endlosfasern können beispielsweise mittels Pultrusion imprägniert werden. Im Falle von Rovings können dabei entweder einzelne Rovingstränge oder mehrere zu einem Band nebeneinandergelegte Rovingstränge durch die Schmelze gezogen und nach Kalibrierung anschließend zur Verfestigung abgekühlt werden.

In einem bevorzugten Verfahren erfolgt die Imprägnierung der Verstärkungsfasern durch gemeinsames Verpressen mit der Schmelze in einer Heißpresse bei Temperaturen von 200 bis 350 °C und Drücken von 1,2 bis 40 bar. Besonders bevorzugt verwendet man dabei eine kontinuierliche Presse, der die Mischung von Polyphenylenethern, Polyamid, Säureamid und gegebenenfalls Styrolpolymer entweder in Form eines vorgefertigten Filmes oder als frisch extrudierte Schmelze gemeinsam mit einer Fasermatte, einem Gewebe oder unidirektionalen Rovingsträngen zugeführt werden. Nach der Imprägnierung in der heißen Laminierzone der Presse erfolgt in einer anschließenden Kühlzone die Abkühlung und Verfestigung des Verbundes ebenfalls unter Druck.

Es ist auch möglich, Schnittfasern mit der pulverförmigen, das Säureamid enthaltenden Polymermischung zu vermischen, anschließend in einem Extruder aufzuschmelzen und als Strang zu extrudieren. Rovingstränge aus Endlosfasern können in einem Extrusionswerkzeug, dem gleichzeitig Schmelze und Rovings zugeführt werden, als faserverstärkter Polymerstrang extrudiert werden. Die faserverstärkten Polymerstränge können nach Abkühlung zu Granulaten geschnitten werden, die beispielsweise durch Spritzgießen oder Extrusion zu Fertigteilen weiterverarbeitet werden können. Die in Form von Bahnen oder Platten vorliegenden Verbundwerkstoffe können als Ausgangsmaterial zur Herstellung von Formteilen durch Heißpressen verwendet werden. Die auf etwa 200 bis 350 °C erwärmten Bahnen oder Platten werden dabei in beheizte Formen eingelegt und bei Temperaturen von etwa 50 bis 100 °C und Drücken von 1 bis 100 bar verpreßt.

Vergleichsbeispiel V1:

Ein Polymerblend aus 55 Gew.% Polyphenylenether (PPE) und 45 Gew.% Polyamid 6 (PA), entsprechend Ultranyl[R] KR 4510 (BASF), wurde in einem Extruder bei 290 °C aufgeschmolzen, über eine Breitschlitzdüse als 1,3 m breiter Film mit einem Flächengewicht von 3033 g/m² extrudiert und einer Doppelbandpresse mit 5 m/min Geschwindigkeit zugeführt. Gleichzeitig wurden der Doppelbandpresse ober- und unterhalb des Schmelzefilmes je eine vernadelte Glasmatte aus Schnittfasern mit einem Flächengewicht von je 650 g/m² (Syncomat, Fa. Syncoglas, Belgien) zugeführt. Bei einer Temperatur von 250 °C in der Heizzone und 80 °C in der Kühlzone, sowie einem Linienpreßdruck von 5 bar wurde eine 3,3 mm dicke, 1,3 m breite, glasfaserverstärkte Bahn mit einem Glasgehalt von 30 Gew.% und einem Flächengewicht von 4333 g/m² erhalten.

Der Schmelzindex (MFI) des Polymerblends (gemessen nach der Extrusion gemäß DIN 53735 in g/10 min bei 280°C und 5 kg Belastung, Düsendurchmesser 2,2 mm) sowie Zugfestigkeit (DIN 53455), Dehnung (DIN 53455), Schlagzähigkeit (DIN 53453), Biege-Elastizitätzmodul (DIN 53457), Wärmeformbeständigkeit (DIN 53461, Methode B) und Wasseraufnahme (DIN 16913, 48 h) des fertigen Verbundes sind in Tabelle 1 zusammengestellt.

Beispiele 2 - 4 und V5

Analog zu Beispiel V1 wurden glasfaserverstärkte Bahnen aus einem Polymerblend aus Polyphenylenether und Polyamid erhalten, mit dem Unterschied, daß dem Polymerblend vor der Extrusion jeweils 2 Gew.%, bezogen auf die Menge des Polyamids, der folgenden in Tabelle 1 angeführten Säureamide zugemischt wurden: Anthranilsäureamid (AN), Adipinsäurediamid (AD), Bernsteinsäurediamid (BA), Ölsäureamid (OA, Vergleichsbeispiel V5). Schmelzindex, sowie mechanische und thermische Eigenschaften sind in Tabelle 1 zusammengestellt.

Vergleichsbeispiel V6

Eine Mischung aus 50 Gew.% eines Gemisches aus 60 % Polyphenylenether und 40 % Polystyrol, entsprechend Noryl 110 von General Electric, und 50 Gew.% Polyamid 6, entsprechend Ultramid B 4 von BASF, wurde aus einem Extruder mit Breitschlitzdüse bei 280°C extrudiert. Der Schmelzefilm (Flächengewicht 3000 g/m²) wurde auf einer Doppelbandpresse bei 250°C und 5 bar kontinuierlich mit 2 Glasmatten (Syncomat, je 650 g/m²) verpreßt. Nach dem Austrag aus der Kühlzone erhielt man eine glasfaserstärkte Bahn von 3,2 mm Dicke, einem Flächengewicht von 4300 g/m² und einem Glasgehalt von 30 Gew.%. Der Schmelzindex der Mischung und die Eigenschaften des Verbundes sind in Tabelle 1 zusammengestellt.

Beispiele 7 und 8

Analog zu Beispiel V 6 wurden glasfaserverstärkte Verbundbahnen aus Polyphenylenether, Polystyrol und Polyamid hergestellt, wobei jedoch vor der Extrusion bei Beispiel 7 2 Gew.% (bezogen auf die Menge des Polyamids) Adipinsäurediamid (AD), und bei Beispiel 8 2 Gew.% Bernsteinsäurediamid (BA) zugesetzt wurde. Der Schmelzindex nach der Extrusion sowie die Eigenschaften der Verbunde sind in Tabelle 1 zusammengestellt.

Tabelle 1

| Beispiel | Säureamid (2 %) | MFI (g/10 min) | Zugfestigkeit (N/mm²) | Dehnung (%) | Schlagzähigkeit (kJ/m²) | Biege-E-Modul (N/mm²) | Wärmeformbeständigkeit (°C) | Wasseraufnahme (Gew.%) |
|---|---|---|---|---|---|---|---|---|
| V1 | - | 18 | 70 | 3,5 | 50 | 6000 | 190 | 0,5 |
| 2 | AN | 260 | 150 | 2,5 | 60 | 7000 | 190 | 0,5 |
| 3 | AD | 245 | 120 | 2 | 65 | 7000 | 190 | 0,5 |
| 4 | BA | 310 | 140 | 2,5 | 55 | 7500 | 190 | 0,5 |
| V5 | OA | 32 | 80 | 3 | 70 | 6500 | 190 | 0,5 |
| V6* | - | 33 | 60 | 2,0 | 45 | 6000 | 180 | 0,5 |
| 7* | AD | 55 | 120 | 2,5 | 55 | 6500 | 180 | 0,4 |
| 8* | BA | 440 | 115 | 3,0 | 50 | 6500 | 180 | 0,4 |

Verbundwerkstoff aus Polyphenylenether und Polyamid mit 30 Gew.% Glasfaser

* zusätzlich Polystyrol in der Matrix

EP 0 369 313 A1

**Ansprüche**

1. Thermoplastischer faserverstärkter Verbundwerkstoff, erhältlich durch Imprägnieren von Verstärkungsfasern mit der Schmelze einer Mischung aus 10 bis 90 Gew.Teilen Polyphenylenether und 90 bis 10 Gew.Teilen Polyamid, wobei 0 bis 50 Gew.% des Polyphenylenethers durch ein thermoplastisches Styrolpolymerisat ersetzt sein können, dadurch gekennzeichnet, daß die Mischung zusätzlich 0,1 bis 10 Gew.%, bezogen auf die Menge des Polyamids, eines aliphatischen, gesättigten Dicarbonsäurediamids mit 3 bis 10 C-Atomen oder Anthranilsäureamid enthält.

2. Verbundwerkstoff nach Anspruch 1, erhältlich durch Imprägnieren von Verstärkungsfasern mit der Mischung aus Polyphenylenether, Polyamid, Säureamid und gegebenenfalls Styrolpolymeren durch Heißpressen bei Temperaturen von 200 bis 350 °C und Drücken von 1,2 bis 40 bar.

3. Verbundwerkstoff nach Anspruch 1 oder 2, dadurch gekennzeichnet, daß die Mischung zur Imprägnierung der Verstärkungsfasern 0,5 bis 5 % Säureamid, bezogen auf die Menge des Polyamids, enthält.

4. Verbundwerkstoff nach einem der Ansprüche 1 bis 3, dadurch gekennzeichnet, daß das Dicarbonsäurediamid 4 bis 6 C-Atome im Molekül enthält.

5. Verbundwerkstoff nach einem der Ansprüche 1 bis 4, dadurch gekennzeichnet, daß die Mischung zur Imprägnierung der Verstärkungsfasern 40 bis 60 Gew.Teilen Polyphenylenether und 60 bis 40 Gew.Teile Polyamid enthält.

6. Verfahren zur Herstellung von thermoplastischen faserverstärkten Verbundwerkstoffen nach Anspruch 1, dadurch gekennzeichnet, daß Verstärkungsfasern mit der Schmelze einer Mischung aus 10 bis 90 Gew.Teilen Polyphenylenether und 90 bis 10 Gew.Teilen Polyamid bei Temperaturen von 200 bis 350 °C imprägniert werden, wobei die Mischung zusätzlich 0,1 bis 10 Gew.%, bezogen auf die Menge des Polyamids, eines aliphatischen, gesättigten Dicarbonsäurediamids mit 3 bis 10 C-Atomen oder Anthranilsäureamid enthält und 0 bis 50 Gew.% des Polyphenylenethers durch ein thermoplastisches Styrolpolymerisat ersetzt sein können.

7. Verfahren zur Herstellung von Verbundwerkstoffen nach Anspruch 6, dadurch gekennzeichnet, daß die Imprägnierung durch gemeinsames Verpressen von Verstärkungsfasern mit der Mischung aus Polyphenylenether, Polyamid, Säureamid und gegebenenfalls Styrolpolymeren bei Temperaturen von 200 bis 350 °C und Drücken von 1,2 bis 40 bar erfolgt.

8. Verfahren zur Herstellung von Verbundwerkstoffen nach Anspruch 7, dadurch gekennzeichnet, daß die Mischung aus Polyphenylenether, Polyamid, Säureamid und gegebenenfalls Styrolpolymeren in Form eines vorgefertigten Films oder eines frisch extrudierten Schmelzefilms eingesetzt wird und gemeinsam mit den Verstärkungsfasern, die in Form einer Matte oder in Form von unidirektionalen Endlosfasersträngen vorliegen, einer kontinuierlichen Presse zugeführt werden.

9. Verwendung von Verbundwerkstoffen nach einem der Ansprüche 1 bis 5 als Ausgangsmaterial zur Herstellung von Formteilen durch Heißpressen.

10. Verwendung von Verbundwerkstoffen nach einem der Ansprüche 1 bis 5 als Ausgangsmaterial zur Herstellung von Granulaten.

Patentansprüche für folgenden Vertragsstaat: ES

1. Verfahren zur Herstellung von thermoplastischen faserverstärkten Verbundwerkstoffen, dadurch gekennzeichnet, daß Verstärkungsfasern mit der Schmelze einer Mischung aus 10 bis 90 Gew.Teilen Polyphenylenether und 90 bis 10 Gew.Teilen Polyamid imprägniert werden, wobei des Mischung zusätzlich 0,1 bis 10 Gew.%, bezogen auf die Menge des Polyamids, eines aliphatischen, gesättigten Dicarbonsäurediamids mit 3 bis 10 C-Atomen oder Anthranilsäureamid enthält und 0 bis 50 Gew.% des Polyphenylenethers durch ein thermoplastisches Styrolpolymerisat ersetzt sein können.

2. Verfahren zur Herstellung von Verbundwerkstoffen nach Anspruch 1, dadurch gekennzeichnet, daß die Imprägnierung durch gemeinsames Verpressen von Verstärkungsfasern mit der Mischung aus Polyphenylenether, Polyamid, Säureamid und gegebenenfalls Styrolpolymeren bei Temperaturen von 200 bis 350 °C und Drücken von 1,2 bis 40 bar erfolgt.

3. Verfahren zur Herstellung von Verbundwerkstoffen nach Anspruch 2, dadurch gekennzeichnet, daß die Mischung aus Polyphenylenether, Polyamid, Säureamid und gegebenenfalls Styrolpolymeren in Form eines vorgefertigten Films oder eines frisch extrudierten Schmelzefilms eingesetzt wird und gemeinsam mit den Verstärkungsfasern, die in Form einer Matte oder in Form von unidirektionalen Endlosfasersträngen vorliegen, einer kontinuierlichen Presse zugeführt werden.

4. Verfahren zur Herstellung von Verbundwerkstoffen nach einem der Ansprüche 1 bis 3, dadurch gekennzeichnet, daß die Mischung zur Imprägnierung der Verstärkungsfasern 0,5 bis 5 % Säureamid, bezogen auf die Menge des Polyamids, enthält.

5. Verfahren zur Herstellung von Verbundwerkstoffen nach einem der Ansprüche 1 bis 4, dadurch gekennzeichnet, daß das Dicarbonsäurediamid 4 bis 6 C-Atome im Molekül enthält.

6. Verfahren zur Herstellung von Verbundwerkstoffen nach einem der Ansprüche 1 bis 5, dadurch gekennzeichnet, daß die Mischung zur Imprägnierung der Verstärkungsfasern 40 bis 60 Gew.Teile Polyphenylenether und 60 bis 40 Gew.Teile Polyamid enthält.

7. Verwendung von Verbundwerkstoffen nach einem der Ansprüche 1 bis 6 als Ausgangsmaterial zur Herstellung von Formteilen durch Heißpressen.

8. Verwendung von Verbundwerkstoffen nach einem der Ansprüche 1 bis 6 als Ausgangsmaterial zur Herstellung von Granulaten.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | WO-A-8 505 372 (GENERAL ELECTRIC CO.)<br>* Seite 11, Zeile 35 - Seite 12, Zeile 3; Seite 18, Zeilen 10-15; Tabelle 8 *<br>----- | 1-10 | C 08 L 71/12<br>C 08 L 77/00<br>C 08 K 5/20 //<br>(C 08 L 77/00<br>C 08 L 71:12 )<br>(C 08 L 71/12<br>C 08 L 77:00 ) |

**RECHERCHIERTE SACHGEBIETE (Int. Cl.5)**

C 08 K
C 08 Z

**Der vorliegende Recherchenbericht wurde für alle Patentansprüche erstellt**

| Recherchenort | Abschlußdatum der Recherche | Prüfer |
|---|---|---|
| DEN HAAG | 09-02-1990 | WILSON A.J.D. |